(19) Europäisches Patentamt
European Patent Office
Office européen des brevets

(11) **EP 4 683 195 A1**

(12) **EUROPEAN PATENT APPLICATION**

(43) Date of publication:
**21.01.2026 Bulletin 2026/04**

(21) Application number: **24188617.5**

(22) Date of filing: **15.07.2024**

(51) International Patent Classification (IPC):
**H02M 1/32** $^{(2007.01)}$       **H02M 3/158** $^{(2006.01)}$

(52) Cooperative Patent Classification (CPC):
**H02M 1/32; H02M 3/1584;** H02M 1/0012;
H02M 1/327

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Infineon Technologies Austria AG
9500 Villach (AT)**

(72) Inventors:
• **SCHWABE, Benjamin
81245 München (DE)**

• **CHAKRABORTY, Sanghamitra
82008 Unterhaching (DE)**

(74) Representative: **Infineon Patent Department
Intellectual Property
Infineon Technologies AG
Postfach 22 16 44
80506 München (DE)**

Remarks:
Amended claims in accordance with Rule 137(2)
EPC.

(54) **MULTIPHASE POWER CONVERTER PHASE HEALTH ASSESSMENT ARCHITECTURE**

(57)     A distributed system and a corresponding method are presented. The distributed system may be configured to monitor a multiphase power converter comprising a plurality of phases. The system may comprise a first phase monitoring circuit associated with a first phase of the multiphase power converter. The first phase monitoring circuit may be configured to determine a first phase state of the first phase, compare the first phase state with an expected phase state, and transmit the first phase state to the central monitoring circuit if the first phase state deviates from the expected phase state. The central monitoring circuit may be coupled to the first phase monitoring circuit via a communication interface. The central monitoring circuit may be configured to receive the first phase state and to determine based on the first phase state that an unexpected phase state has occurred at the first phase.

FIG 3

EP 4 683 195 A1

## Description

### Technical field

The present document relates to multiphase power converters. In particular, the present document relates to a system for estimating the health of individual phases of a multiphase power converter.

### Background

Power rails delivering CPUs, GPUs, ASICs, SoCs, AI chips etc. need to be able to provide more and more power at low current and voltage ripple and good transient load response. Hence, multiphase DC/DC converters are being used in these applications. The phase count of the typically used multiphase buck converters is sharply increasing. It can be expected that these voltage regulator modules (VRMs) will have to provide multiple Kilowatts of Energy at 1.xx V. In a case like these, a power converter may consist of 50 phases.

### Summary

According to an aspect, a distributed system is presented. The distributed system may be configured to monitor a multiphase power converter comprising a plurality of phases. The system may comprise a first phase monitoring circuit associated with a first phase of the multiphase power converter. The first phase monitoring circuit may be configured to determine a first phase state of the first phase, compare the first phase state with an expected phase state, and transmit the first phase state to the central monitoring circuit if the first phase state deviates from the expected phase state. More specifically, the first phase monitoring circuit may be configured to transmit the first phase state to the central monitoring circuit only if the first phase state deviates from the expected phase state. The central monitoring circuit may be coupled to the first phase monitoring circuit via a communication interface. The central monitoring circuit may be configured to receive the first phase state and to determine based on the first phase state if an unexpected phase state has occurred at the first phase. In other words, the central monitoring circuit may either determine only based the first phase state or may determine based on the first phase state and other factors.

In addition, the central monitoring circuit may be configured to take into account other decision criteria (such as phase state information from other phases) when determining whether the unexpected phase state has actually occurred or not. If, however, the central monitoring circuit decides that the unexpected phase state has occurred, the first phase may be deactivated as a consequence.

The multiphase power converter may comprise a plurality of phases which may be identical and arranged in parallel to each other. Each phase (such as e.g. the first phase) may comprise a buck-type power converter with a power stage and an output inductor, or an output transformer in case of a trans-inductance voltage regulator TLVR topology. In any case, the output currents of all phases are summed up at the output of the multiphase power converter. The power stage may comprise a half-bridge with corresponding driver circuitry, wherein the half-bridge may comprise two transistors typically denoted as high-side switching element and low-side switching element. Theses switching elements may be implemented with any suitable devices, such as, for example, metal-oxide-semiconductor field effect transistors MOSFETs, insulated-gate bipolar transistors IGBTs, MOS-gated thyristors, or any other suitable power devices. For instance, the switching elements may be implemented using a III-V compound semiconductor material such as e.g. GaN- high-electron-mobility transistors HEMTs. Each switching element may have a control terminal (e.g. a gate) to which a respective control signal (e.g. driving voltage/current) may be applied to turn the switching element on (i.e. to close the switching element) or to turn the switching element off (i.e. to open the switching element).

The first phase monitoring circuit may comprise a microcontroller and a local memory to perform the functions described within this document. Similarly, the central monitoring circuit may comprise a suitable microcontroller and memory to perform the described functions. The communication interface may comprise any sort of digital or analog communication bus, or a combination thereof. The communication interface may be bidirectional i.e. enabling both communication from the central monitoring circuit to the first phase monitoring circuit and vice versa from the first phase monitoring circuit to the central monitoring circuit. Since the first phase monitoring circuit may be configured to transmit the first phase state to the central monitoring circuit only if the first phase state deviates from the expected phase state, communication bandwidth on the communication interface may be saved.

Although the first phase monitoring circuit is logically associated with the first phase, this does not mean that the first phase monitoring circuit must be physically located close to the first phase. The first phase monitoring circuit may be located elsewhere within the multiphase power converter. Nevertheless, it may be advantageous to place the first phase monitoring circuit in close vicinity to the first phase since, as will be discussed in the below description in more detail, the first phase monitoring circuit may be configured to read out local sensor values related to e.g. currents, voltages, or temperatures of the first phase. The central monitoring circuit and the first phase monitoring circuit may be physically separated.

The first phase state may be based on at least one of: a value indicative of a current through the first phase, a value indicative of a local phase temperature, a value indicative of a control signal applied to the first phase, and a value indicative of an ambient temperature associated with the overall multiphase power converter. The first phase monitoring circuit may be configured to receive said values from either dedicated sensors or from the central monitoring circuit.

The first phase state may comprise a coefficient $\alpha = \frac{T-\beta}{I^2}$ . The first phase monitoring circuit may be configured to determine $\alpha$ based on the value $T$ indicative of a local phase temperature, the value $\beta$ indicative of an ambient temperature associated with the overall multiphase power converter, and the value $I$ indicative of a current through the first phase. For example, the value $T$ indicative of the local phase temperature may be indicative of a temperature of a transistor of the first phase. In particular, the transistor may be a MOSFET transistor. The central monitoring circuit may be configured to receive the value $\beta$ indicative of the ambient temperature from a temperature sensor, and to forward the value $\beta$ to the first phase monitoring circuit. Analogously, the central monitoring circuit may be configured to forward the value $\beta$ to other phase monitoring circuits associated with the other phases.

The first phase monitoring circuit may be configured to transmit the first phase state to the central monitoring circuit only if the coefficient $\alpha \geq \alpha_0 * f$, wherein $\alpha_0$ is an initial coefficient, and $f$ is a factor larger than 1. The initial coefficient $\alpha_0$ may be a coefficient previously determined by the first phase monitoring circuit. For instance, the first phase monitoring circuit may be configured to determine the initial coefficient $\alpha_0$ before the monitoring starts (e.g. at the beginning of the lifetime of the monitored transistor) and store the initial coefficient $\alpha_0$ in a memory of the first phase monitoring circuit. The initial coefficient $\alpha_0$ may be an example for the expected phase state of the first phase, and the coefficient $\alpha$ may be an example for the first phase state determined by the first phase monitoring circuit.

The unexpected phase state of the first phase may be an increased on-resistance of a transistor within the first phase. As already mentioned in the foregoing description, the transistor may be e.g. a high-side or low-side switching element of a half-bridge of a power stage of the first phase. The increased coefficient $\alpha$ may be indicative of an increased on-resistance of said transistor, and the fact that $\alpha$ exceeds a certain threshold may be indicative of the end of the useful lifetime of said transistor.

The central monitoring circuit may be configured to receive a second phase state from a second phase monitoring circuit and to determine, based on both the first phase state and the second phase state, that the unexpected phase state at the first phase has occurred. The system may comprise the second phase monitoring circuit. The second phase monitoring circuit may have a similar or identical functionality as the first phase monitoring circuit. The second phase may be located in close vicinity to the first phase within the multiphase power converter. For example, the first phase and the second phase may be neighboring phases in the multiphase power converter.

The central monitoring circuit may be configured to determine whether a converter state of the multiphase power converter is a steady state or a transient state based on at least one of the following converter state variables: an input voltage of the multiphase power converter, an output voltage of the multiphase power converter, an output current of the multiphase power converter, a reference voltage of the multiphase power converter, and a duty cycle control signal of the multiphase power converter.

On the one hand, the above-mentioned phase state may be regarded as a local state of a single phase (e.g. the first phase) of the multiphase power converter. On the other hand, the converter state may be regarded as a global state of the overall multiphase power converter. The multiphase power converter may comprise a feedback loop for regulating the output current and/or the output voltage by comparing a feedback voltage indicative of the output voltage with the reference voltage. In particular, an error voltage is determined based on the difference between the feedback voltage and the reference voltage. The duty cycle control signal is then determined based the error voltage (e.g. using a PID controller) and applied to control the switching behavior of transistors of the phases of the multiphase power converter.

The central monitoring circuit may be configured to determine a variance of the at least one of the converter state variables, and to determine that the converter state is the transient state if the variance exceeds a threshold value.

Vice versa, if only one converter state variable is considered by the central monitoring circuit, the central monitoring circuit may be configured to determine that the converter state is the steady state if the variance does not exceed the threshold value. If more than one of the converter state variables is considered by the central monitoring circuit, the central monitoring circuit may be configured to determine that the converter state is the steady state if the variances of all considered converter state variables do not exceed their respective threshold values (which may be set independent of each other).

The central monitoring circuit may be configured to determine whether a converter state of the multiphase power converter is the steady state or the transient state using an artificial neural network or by checking the range of voltages, currents and controller output.

The central monitoring circuit may be configured to, if it is determined that the converter state is the steady state, estimate a one or more phase state variables of the first phase based on the converter state variables and to transmit said one or more phase state variables to the first phase monitoring circuit. The phase state variables may include e.g. a value I indicative of a current through the first phase, or a control signal applied to the first phase.

The first phase monitoring circuit may be configured to, upon receipt of the one or more phase state variables from the central monitoring circuit, determine whether a thermal phase state of the first phase is a steady state or a transient state based on a measurement of the local phase temperature of the first phase. The first phase monitoring circuit may be configured to compare the first phase state with the expected phase state only if the central monitoring circuit has determined that the converter state is the steady state, and the first phase monitoring circuit has determined that its thermal phase state is the steady state.

According to another aspect, a method of monitoring a multiphase power converter comprising a plurality of phases is presented. The method may comprise steps corresponding to the functional features of the first phase monitoring circuit, the second phase monitoring circuit, and the central monitoring circuit described throughout this document. The method may comprise determining, by a first phase monitoring circuit associated with a first phase of the multiphase power converter, a first phase state of the first phase. The method may comprise comparing, by the first phase monitoring circuit, the first phase state with an expected phase state. The method may comprise transmitting, by the first phase monitoring circuit, the first phase state to a central monitoring circuit if the first phase state deviates from the expected phase state. The method may comprise determining, by the central monitoring circuit, based on the first phase state that an unexpected phase state has occurred at the first phase.

The first phase state may be based on at least one of: a value indicative of a current through the first phase, a value indicative of a local phase temperature, a value indicative of a control signal applied to the first phase, and a value indicative of an ambient temperature associated with the overall multiphase power converter.

The first phase state may comprise a coefficient $\alpha = \frac{T - \beta}{I^2}$. The method may comprise determining, by the first phase monitoring circuit, the coefficient $\alpha$ based on the value T indicative of a local phase temperature, the value $\beta$ indicative of an ambient temperature associated with the overall multiphase power converter, and the value I indicative of a current through the first phase. The value T indicative of the local phase temperature may be indicative of a temperature of a transistor of the first phase.

The method may comprise receiving, by the central monitoring circuit, the value $\beta$ indicative of the ambient temperature from a temperature sensor. The method may comprise forwarding, by the central monitoring circuit, the value $\beta$ to the first phase monitoring circuit.

The method may comprise transmitting, by the first phase monitoring circuit, the first phase state to the central monitoring circuit only if the coefficient $\alpha \geq \alpha_0$ * f, wherein $\alpha_0$ is an initial coefficient, and f is a factor larger than 1. The unexpected phase state of the first phase may be an increased on-resistance of a transistor within the first phase.

The method may comprise receiving, by the central monitoring circuit, a second phase state from a second phase monitoring circuit. The method may comprise determining, by the central monitoring circuit, based on both the first phase state and the second phase state, that the unexpected phase state at the first phase has occurred.

The method may comprise determining, by the central monitoring circuit, whether a converter state of the multiphase power converter is a steady state or a transient state based on at least one of the following converter state variables: an input voltage of the multiphase power converter, an output voltage of the multiphase power converter, an output current of the multiphase power converter, a reference voltage of the multiphase power converter, and a duty cycle control signal of the multiphase power converter. At this, the method may comprise determining, by the central monitoring circuit, a variance of the at least one of the converter state variables. The method may comprise determining, by the central monitoring circuit, that the converter state is the transient state if the variance exceeds a threshold value. Alternatively or additionally, the method may comprises determining, by the central monitoring circuit, whether a converter state of the multiphase power converter is the steady state or the transient state using an artificial neural network.

The method may comprise estimating, by the central monitoring circuit, if it is determined that the converter state is the steady state, one or more phase state variables of the first phase based on the converter state variables. The method may comprise transmitting, by the central monitoring circuit, said one or more phase state variables to the first phase monitoring circuit.

The method may comprise determining, by the first phase monitoring circuit, upon receipt of the one or more phase state variables from the central monitoring circuit, whether a thermal phase state of the first phase is a steady state or a transient state based on a measurement of the local phase temperature of the first phase.

The method may comprise comparing, by the first phase monitoring circuit, the first phase state with the expected phase state only if the central monitoring circuit has determined that the converter state is the steady state, and the first phase monitoring circuit has determined that its thermal phase state is the steady state.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

In the present document, the term "couple" or "coupled" refers to elements being in electrical communication with each other, whether directly connected e.g., via wires, or indirectly connected via other circuit elements between them. For example, two elements may be said to be coupled even if there is a circuit element such as a switch (which may be turned on and off) in between them. On the other hand, the term "connect" or "connected" refers to elements being directly electrically connected with each other, e.g. via wires, and no circuit elements are located between them.

**Short description of the figures**

The present invention is illustrated by way of example, and not by way of limitation, in the figures in which like reference numerals refer to similar or identical elements, and in which

Fig. 1 shows exemplary high-level schematics of a multiphase power converter,
Fig. 2 shows an exemplary communication interface between the phases and a central health monitor logic,
Fig. 3 shows an overview of an exemplary distributed system for phase health monitoring,
Fig. 4 shows a typical control structure of a single-phase buck power converter,
Fig. 5 shows an exemplary steady state estimator,
Fig. 6 shows an exemplary neural networkbased approach for a steady state estimator, and
Fig. 7 shows an exemplary minimum communication architecture between the central logic and the phase logic.

**Detailed Description**

Without loss of generality, this section describes specific examples how the claimed health monitoring architecture may be implemented in practice. The description of the various modules and functions of the central monitoring circuit and the phase monitoring circuits are not meant to limit the scope of the claims but merely show possible ways to implement the proposed approach.

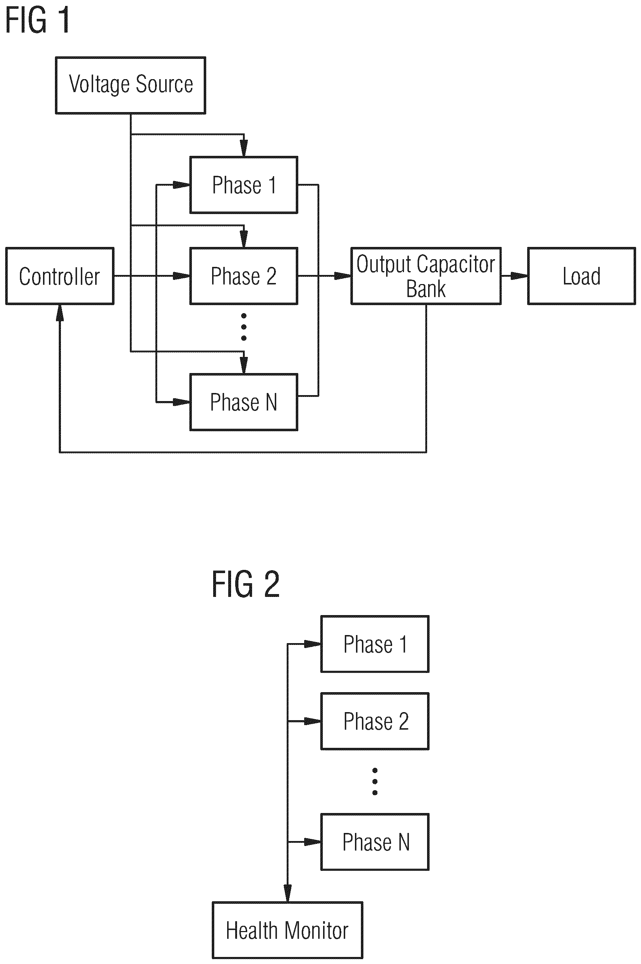

Fig. 1 shows exemplary high-level schematics of a multiphase power converter. Power semiconductors, like the metal-oxide-semiconductor field-effect transistor (MOSFETs) in the power stage of each phase, are one of the main sources of failures in power converters. Since the amount of switching MOSFETs increases linearly with the phase count, a failure in one of the transistors becomes more and more likely. If this transistor degradation is observed early enough, the concerned phase can be removed safely from the multiphase buck converter and the system may run for a while without a large impact on performance. This way, an unscheduled down time caused by a catastrophic failure of the power converters could be transformed into a scheduled down time and potentially a slightly decreased system performance (e.g. a CPU needs to be slightly throttled) before the maintenance. The power switch degradation may be observed before it escalates into a critical failure of the entire converter (e.g. a shorted high side or low side transistor and therefore a shorted input or an output voltage out of specifications).

The degradation of a power transistor may result in the change of two externally observable values. On the one hand, a change in the threshold voltage (the voltage at which the transistor goes into a conductive state) may be observable. On the other hand, an increase of the resistivity of the MOSFET between drain and source when it is fully conductive (RDSon) may be observable. While it may be possible to measure these values in laboratory setups, it may not be possible to measure them during operation of a switched mode power converter for the following reasons. Firstly, a small change in the threshold voltage may impact the time of switching minimally as the rising and falling edges of the driver signals are typically very steep. Hence, on/off times remain almost unchanged leading to no significant change in the output voltage or transient behavior of the converter. Only large deviations may lead to an increased resistivity because the transistor no longer opens fully and here a voltage drop for larger currents can be observed. And secondly, as transistors are typically designed to have a small RDSon, any relative increase (e.g. 1.5x the nominal value) also only shows a small effect. On top of this, the already small effect of one single MOSFET is covered very easily in the case of a high phase count (the other phases' transistors will simply compensate).

The typically applied power converters may use some form of phase balancing to ensure the loads see roughly the same amount of "stress". High-end solutions may read out temperature and current for each phase individually and controllers may stop conversion in case the converter threatens to be used out of specifications (e.g. getting too hot, an overtemperature fault (OTP fault) would be triggered). However, these measures are relatively simple, and they will at best spot the issue just before a catastrophic event is happening or it happened, and the system shuts down in order to avoid further damages. In any of these cases, an unplanned downtime may not be avoidable.

Within this document, a system for estimating the health of each power converter phase is being proposed which may be based e.g. on the control signal (duty cycle for each phase), measurements of voltages, currents and phase temperature, comparison between the individual phases and a distributed logic. Moreover, this system may require a bidirectional interface between the phases and the converter.

The need of distributed logic

In order to minimize the impact of the power converter system, it may be considered to retrieve the information for each phase and process them centrally in a health monitor micro controller as illustrated in Fig. 2. Fig. 2 shows an exemplary communication interface between the phases and a central health monitor logic.

This approach, however, requires a high-speed communication bus between the phases and the health monitor and also a very powerful computation engine making this approach economically unattractive: The current and voltage signals need to be transferred for each switching cycle, so we can compare them. On top of that, a regular update of the temperature may be needed. Depending on the phase count, one may end up with data rates that only high-end communication systems, like USB3, Thunderbolt or alike can handle, see below table. For a comparison, the maximal data rate for UART is typically 5Mbit/s and I2C 400kbit/s - far from what is required here.

| Phase Count | 8 | 16 | 32 | 64 |
|---|---|---|---|---|
| Data Rate MB/s | 70.4 | 140.8 | 281.6 | 563.2 |

The above table shows roughly estimated data rates needed for a multiphase buck converter for only transferring the data from the phases to the health monitor. A switching frequency of 800MHz is assumed and a data package per phase and cycle of 11 bytes is assumed (with one byte address, one byte power stage temperature, 2 bytes for the high side voltage and current each, 2 bytes for the low side voltage and current each).

As a consequence, an approach may be taken where less data is being transformed and there are multiple aspects which can lead to a reduction of the necessary data: Firstly, it is recommendable to only compare the individual phases with each other if the converter is in steady state. As long as it is in a transient period and has not returned into steady state, the phases should not be compared with each other, and the converter controller may change their firing order and/or assign different duty cycles to them. Hence, the phases are subjected to very different conditions. Secondly, if a phase is behaving as expected, it should not actively send data. If the measured data deviates significantly from the expected values, then it should inform the health monitoring circuit. And thirdly, redundant data, e.g. on time duration and duty cycle should not be transferred.

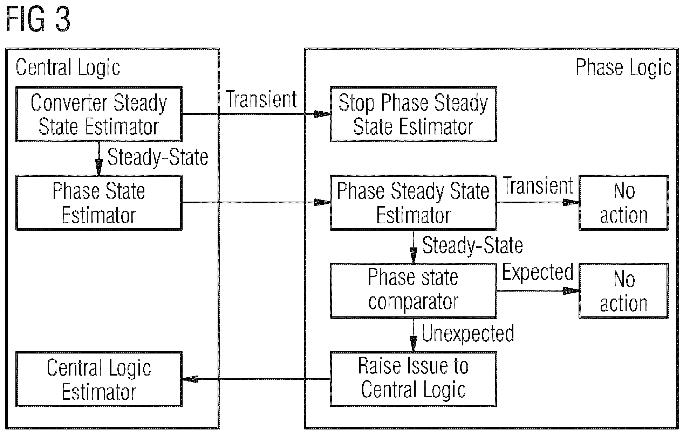

The three principles above may increase the complexity of the system, but they make is feasible in the first place. The general overview of such a distributed logic system is being presented in Fig. 3.

Fig. 3 shows an overview of an exemplary distributed system for phase health monitoring. The system comprises a central logic (central monitoring circuit in the claims) and a phase logic (first or second phase monitoring circuit in the claims).

It is regularly assessed if the system is in steady state. The moment a transient (e.g. due to a change in input voltage or output current) is detected, all power health related measurements and computation threads may be stopped. Only the converter steady state estimator will regularly check if the system has settled to a steady state.

Once it has settled to a steady state, the expected steady state behavior of each phase may be computed by the central logic. This may include the expected current for each phase (or the duty cycle), the input and output voltages and the expected temperature.

Based on this input and the measurements, it may be assessed if the phase itself is in steady state. For example, the system may already be electrically in steady state but the power stage had not thermally settled. Only, if the phase itself also is in steady state, a comparison between the expected and the measured data is being performed. Note, that this comparison may not be a simple comparison if the data is matching. As an example, if the phases are physically distributed in a row the phases in the middle are heated more by their neighbors than the phases that are at the edge.

The moment this phase logic detects an unexpected set of data, an issue is being raised to the central logic and it will decide further steps, e.g. raising a flag to the power management IC or load, shut down the controller or request additional data from this and/or other phases.

Converter steady state estimator

If the state variables of the power converter remain unchanged over a period of time, it is in steady state. It may be taken out of steady state, if some output or input variable is changing, e.g. a change in the input voltage or a change in the output current or a change of the reference voltage of the converter.

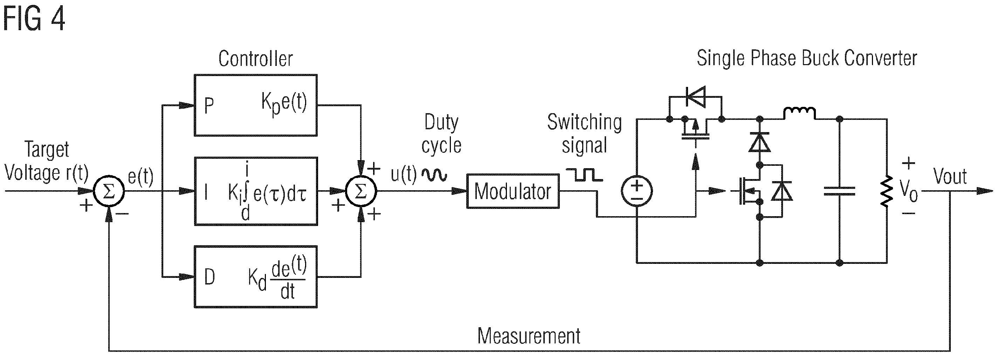

Fig. 4 shows a typical control structure of a single-phase buck power converter. The example shows a single-phase buck converter, but it also extends to multiphase converters and other power topologies. At least the output voltage may be measured, compared to a target voltage and this difference is referred to error voltage which is fed into the controller. Modern controllers may also modify this with an inner current loop for phase balancing and improvement in transient behavior.

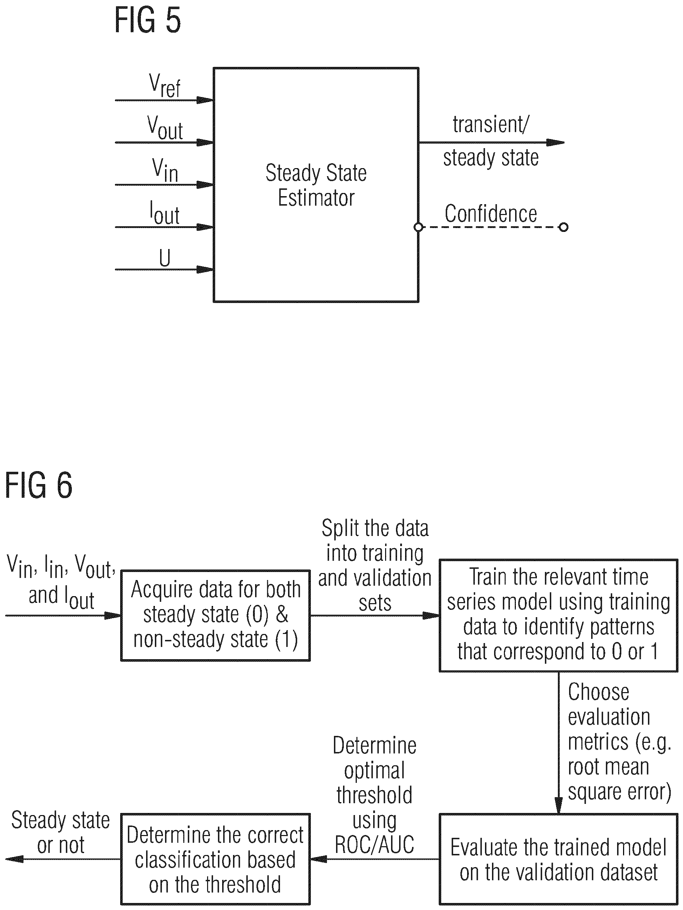

Hence, steady state may be characterized by an error voltage being close to zero. As a result, the duty cycle produced by the converter will be constant. Also, Vin and Vout, Iin and Iout stay constant, too. As a result, these measures may form the input of the steady state estimator, see Figure 5.

Fig. 5 shows an exemplary steady state estimator. The variables fed into the steady state estimator are denoted as converter state variables in the claims: reference voltage $V_{ref}$, input and output voltage ($V_{in}$, $V_{out}$) and output current ($I_{out}$) and the control signal u may be included to determine the status of the power converter. The status may be transient or steady state. Besides this Boolean output, a confidence value may also be provided optionally. All of the inputs may either be presented as time series or only the last measurement value (and the estimator has an internal memory).

In practical implementations, all these converter state variables are fed as entire discretized time series with a fixed length into the estimator or just the last update value. In the latter case, the estimator circuit usually has some internal memory. This estimator may be implemented with classical rules or with the help of a neural network.

Classical approach

As discussed above, the state variables are not changing in the steady state case or mathematically formulated, their time series are stationary. For example, two different statistical tests may be used for determining the stationarity of a time series: the augmented Dickey-Fuller test and the KPSS test. In our case, the KPSS seems less appropriate, as we don't expect to have a determinist trend for each variable. However, in practice, it may be much effort to implement the entire test and also tune the significance level properly (it should be adjusted because of limited measurement accuracies incl. ADC conversion).

Mathematically slightly less strict is to ensure that the variance and the mean stay constant over a time interval.

Let $V_{ref} \in \mathbb{R}^{2n}, V_{out} \in \mathbb{R}^{2n}, V_{in} \in \mathbb{R}^{2n}, I_{out} \in \mathbb{R}^{2n}$ and $u \in \mathbb{R}^{2n}$ denote the last 2n samples from the state variable time series. Then, a constant mean of the time series x (which can be any of the time series above) can be assumed, if

$$|mean(x(1:n)) - mean(x(1+n:2*n))| < t_1.$$

A small threshold value $t_1$ may be used to compensate for other noise sources, e.g. ADC resolution and other sources of limited measurement accuracies. Moreover, the variance of each time series needs to be below another threshold value $t_2$:

$$\mathrm{var(x)} < t_2.$$

Note, that this equation is derived from the fact that the variance must not change over any subset. Hence, any form of oscillation cannot be part of the signal. Based on this, the following functions provide a good indication of steady state:

$$S = var\,(V_{ref}) < t_3 \;\&\; var\,(V_{out} < t4 \;\&\; var\,(V_{in}) < t_5 \;\&\; var\,(I_{out}) < t_6 \;\&\; var\,(u) < t_7,.$$

The threshold values $t_3$, $t_4$, $t_5$, $t_6$ and $t_7$ need to be pre-defined and are depending on the application. All of them must be positive values, since there always is some form of measurement noise present which needs to be accounted for. This equation enables a fairly simple implementation, but it also provides another nice feature: If the thresholds are set small enough, the likelihood of obtaining a false positive steady state estimate drops significantly. One larger change in the past is enough to ensure that for an entire time-interval the assumption of steady state is rejected (possibly until this event is so far in the past that it no longer fits into the memory).

The downside of it is, that there is no general rule of how to set the threshold values and also the confidence of this decision is not available. Depending on these values, it may be a rather strict or a rather loose criterion.

Neural network based approach

A good choice is to utilize a neural network which can keep track of both the information of the current timestep and for the prior time steps, as the generated data are a sequence of observations of variables like $V_{in}$, $V_{out}$, $I_{in}$ and $I_{out}$ measuring the output of a sample through time. Long Short-Term Memory (LSTM) and Gated Recurrent Unit (GRU), which are variants of Recurrent Neural Network (RNN) and Temporal Convolutional Network (TCN) are good choices that can manage such kind of data. Fig. 6 shows an exemplary neural network based approach for a steady state estimator. The process may include:

1. Collect the datasets that include the relevant variables for both steady state and non-steady (transient) state conditions and label accordingly.

2. Define the input and output sequences for the chosen network (e.g., LSTM). The input sequence can consist of past values of the variables, capturing the temporal information. The output can be a binary label indicating whether the current time step corresponds to a steady state (0) or a non-steady state (1). Split the data into training and validation sets.

3. Using the labeled training data, train the model while modifying its weights and biases to minimize an appropriate loss function. The input sequences are analyzed by the LSTM to identify patterns and dependencies that correspond to steady-state or non-steady-state conditions.

4. Using the proper evaluation metrics, evaluate the trained model on the validation set to assess the model's ability to categorize steady-state and non-steady-state conditions based on the provided time series data is evaluated in this examination.

5. Choose a threshold that strikes a balance between false positives and false negatives. The predictions of the model are classified as either steady-state or non-steady-state conditions based on this threshold. One may decide whether the power system is most likely in a steady state at each time step by comparing the projected likelihood or class labels with the specified threshold.

To determine the maximum likelihood of correct classification based on a threshold, one may use Receiver Operating Characteristic (ROC) and Area Under the ROC Curve (AUC) analysis. The process may involve some or all of the following steps:

1. Obtain the predicted probabilities from the model for the validation or test dataset. These probabilities show the model's estimated likelihood of belonging to the positive class (steady state) for each data point.

2. Iterate through various threshold values between 0 and 1. Each threshold will be used to classify the predicted probabilities into positive or negative classes (steady state or non-steady state).

3. Create a confusion matrix based on the threshold-based classifications and then calculate the true positive rate (TPR) and false positive rate (FPR) for each threshold.

4. For every threshold value, plot the TPR vs the FPR. This creates the ROC curve which shows how different threshold selections affect the trade-off between sensitivity (TPR) and specificity (1 - FPR). Next, determine the AUC, which measures a model's overall effectiveness in properly identifying the classes. The AUC has a range of 0 to 1, with 1 being a perfect classifier and 0.5 denoting random performance.

5. Identify the optimal threshold corresponding to the highest TPR or the highest sum of sensitivity and specificity on the ROC curve. This threshold maximizes the likelihood of correct classification based on the chosen evaluation metric.

Phase state estimator

The phase state estimator of the central logic may be configured to compute the estimated phase state. Once the converter has reached any steady state, the state of each phase can be derived from simple models:

1. The input voltage for all phases may be the same and may match the converter input voltage almost perfectly. This is trivial since the high side source for each phase and the low side drain for each phase are connected to $V_{in}$ and ground, respectively.
2. The energy transmitted by each phase may be pretty much the same - averaged of the cycle and therefore also the current through each phase may be the same on average.
3. The control signal may be the same for each phase as phase balancing may be achieved.

Mathematically speaking, this leads to the following equation for each switching cycle:

$$u_i = u_j \quad \forall i, j = 1 \dots N$$
$$I_i = I_j \quad \forall i, j = 1 \dots N$$

With N denoting the phase count, u denoting the control signal, and I denoting the phase currents.

Phase steady State Estimator

Once the converter has electrically settled, the next thing to check is if each phase has thermally settled. For this the techniques presented for the converter steady state can be applied analogously on the time series given by the temperature measurements of each phase individually.

Phase state comparator

The phase state comparator of the phase logic may be configured to compare measurements with the expected state. Once the converter has electrically and the phase thermally settled, the system can be considered in all relevant aspects to be in steady state. All phase variables are now compared to a value from a basic model:
Due to phase balancing, the control signal (and therefore the duty cycle) of all phases is almost the same:

$$u_k \approx u_j \quad j, k \in [1, 2, \dots N\}$$

Slight differences may occur due to limited measurement and computation accuracy.
For a buck converter, the duty cycle can also be estimated in first order and in the steady state case by

$$u = \frac{V_{out}}{V_{in}}.$$

Since the control signal for all phases is the same, their switching signals are also almost the same (unless there is a defect in the MOSFET driver of this phase) which results in an equal share of the energy and therefore the current transferred. Hence, the current through each phase must approximate the output current divided by the phase count:

$$I_k \approx \frac{I_{out}}{N} \quad \forall k \in \{1, 2, \dots N\}$$

Small differences are to be expected for limited measurement accuracy.
As pointed out, a change of the RDS$_{on}$ is virtually not detectable. However, one source of heating up the MOSFET is given by:

$$E_{loss} = RDS_{on} I^2$$

With m denoting the mass, M the molar Mass and c the specific thermal capacity, the definition of the thermal energy is defined by:

$$E_{thermal} = c \, m \, M \, T$$

Assuming that the loss energy is transformed completely into thermal energy, one obtains:

$$T = \frac{RDS_{on} I^2}{c \, m \, M}$$

The main observation is, that the temperature increase of each phase is proportional to the squared current.
While the electrical properties are the same for all phases (at least as a first order approximation), they may face different thermal environments. If the phases are located next to each other on a PCB, the phases in the middle are heated up more by their neighbors than the one on the edge which just has one neighbor. Air convection, a blowing fan or the vicinity to another heating component in the system have further result in different temperatures for each phase and also their changes may be different. Based on the discussion above, one can approximate the temperature change dependency on the currently by the following formula:

$$T = \alpha I^2 + \beta,$$

with $\beta$ denoting the ambient temperature, which is either measured or kept constant, depending on the application. Here, it is assumed, to be measured (by the central control unit). Since the temperature of the phases and the electric current flowing through it are also measured, the coefficient $\alpha$ can be computed by:

$$\alpha = \frac{T - \beta}{I^2}.$$

This coefficient is then measured in the beginning of the lifetime by sweeping through a set of currents, waiting for the system to electrically and thermally settle and measuring the temperature. This initial coefficient is referred to as $\alpha_0$, which is proportional to the RDS$_{on}$. It is assumed that the MOSFET is close to the end of its useful lifetime, if RDS$_{on}$ has increased by a factor of 1.25 from the original value.

So, one option to highlight a phase issue is by measuring T,I and $\beta$ and then compare the present value for $\alpha$ and compare it with the one obtained at the beginning of the lifetime. If

$$\alpha(t) \geq \alpha_0 * 1.25,$$

a warning should be raised. There may be a second, higher threshold at which another, more massive action, like shutting down this phase, may be initiated. The environmental sensor measuring $\beta$ needs to be placed with care, so that changes in the thermal environment are properly covered.

Central logic estimator

Once a failure is suspected by the logic inside the individual phase and raised to the central logic, a comparison with the neighboring phases is necessary, as they are thermally close sudden changes in the value $\beta$ can be determined this way. With the error flag, the phase logic provides an ID, the measured current of the phase, its temperate to the central logic and the estimated values for $\alpha$ and $\alpha_0$. Then, the central logic requests the same information from the two neighboring phases and compares the values. If the value of $\alpha$ and $\alpha_0$ is not showing a similar, out of range behavior, a failure is assumed, and the central logic may react with the following options:

- Ignore the fault,
- Raise a warning flag to the main power management IC,
- Modify the control scheme to exclude the suspicious phase, and/or
- Shut down the controller if a save operation can no longer be guaranteed.

Communication bus

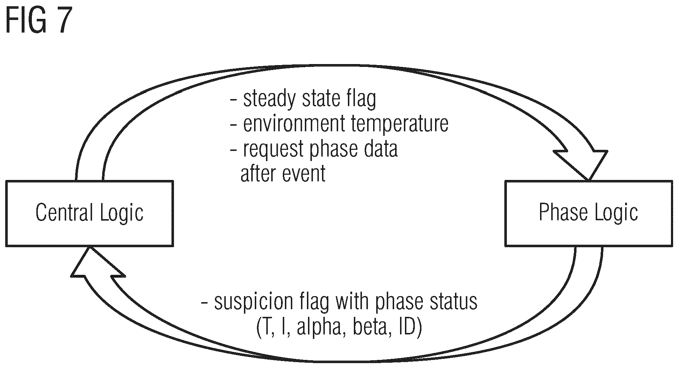

The system described above has been designed in such a way that data predominantly needs to be transferred if an event happened, e.g. the system went out of state or a phase suspects a fault. The only regular update is required for the environment temperature. An overview of a minimal communication architecture is given in Fig. 7. In particular, Fig. 7 shows an exemplary minimum communication architecture between the central logic and the phase logic. As polling information needs to be avoided, a multi-master architecture for this interface needs to adopted. So, a system like multi master I2C seems a good choice.

Analog interface between converter and power stages

It may now always be possible to equip the power stages with a digital interface, for example for cost reasons. In this case, the power stage needs to provide to analog signals providing the temperature and the current reading of each phase as a voltage (an analogue signal). The downside of such an approach is that most likely additional components need to be placed on the board and the PCB and additional signals need to be routed properly and shielded as their precision is crucial for the robustness of this method.

Due to the amount of the data that needs to be handled and the very limited energy budget of this functionality, conversions to digital signals should be performed only if they are necessary. On the other hand, not all functions that can be realized easily in the digital design space, have a straight forward analog corresponding circuit.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

**Claims**

1. A distributed system configured to monitor a multiphase power converter comprising a plurality of phases, the system comprising

   - a first phase monitoring circuit associated with a first phase of the multiphase power converter, wherein the first phase monitoring circuit is configured to determine a first phase state of the first phase, compare the first phase state with an expected phase state, and transmit the first phase state to a central monitoring circuit if the first phase state deviates from the expected phase state, and
   - the central monitoring circuit coupled to the first phase monitoring circuit via a communication interface, wherein the central monitoring circuit is configured to receive the first phase state and to determine based on the first phase state if an unexpected phase state has occurred at the first phase.

2. The system according to claim 1, wherein the first phase state is based on at least one of: a value indicative of a current through the first phase, a value indicative of a local phase temperature, a value indicative of a control signal applied to the first phase, and a value indicative of an ambient temperature associated with the overall multiphase power converter.

3. The system according to any one of the preceding claims, wherein the first phase state comprises a coefficient $\alpha = \frac{T - \beta}{I^2}$, and wherein the first phase monitoring circuit is configured to determine the coefficient $\alpha$ based on the value $T$ indicative of a local phase temperature, the value $\beta$ indicative of an ambient temperature associated with the overall multiphase power converter, and the value $I$ indicative of a current through the first phase.

4. The system according to claim 3, wherein the value $T$ indicative of the local phase temperature is indicative of a temperature of a transistor of the first phase.

5. The system according to claim 3 or 4, wherein the central monitoring circuit is configured to receive the value $\beta$ indicative of the ambient temperature from a temperature sensor and to forward the value $\beta$ to the first phase monitoring circuit.

6. The system according to any one of claims 3 to 5, wherein the first phase monitoring circuit is configured to transmit the first phase state to the central monitoring circuit only if the coefficient $\alpha \geq \alpha_0 * f$, wherein $\alpha_0$ is an initial coefficient, and $f$ is a factor larger than 1.

7. The system according to any one of the preceding claims, wherein the unexpected phase state of the first phase is an increased on-resistance of a transistor within the first phase.

8. The system according to any one of the preceding claims, wherein the central monitoring circuit is configured to receive a second phase state from a second phase monitoring circuit and to determine, based on both the first phase state and the second phase state, that the unexpected phase state at the first phase has occurred.

9. The system according to any one of the preceding claims, wherein the central monitoring circuit is configured to determine whether a converter state of the multiphase power converter is a steady state or a transient state based on at least one of the following converter state variables: an input voltage of the multiphase power converter, an output voltage of the multiphase power converter, an output current of the multiphase power converter, a reference voltage of the multiphase power converter, and a duty cycle control signal of the multiphase power converter.

10. The system according to claim 9, wherein the central monitoring circuit is configured to determine a variance of the at least one of the converter state variables, and to determine that the converter state is the transient state if the variance exceeds a threshold value.

11. The system according to claim 9, wherein the central monitoring circuit is configured to determine whether a converter state of the multiphase power converter is the steady state or the transient state using an artificial neural network.

12. The system according to any one of claims 9 or 11, wherein the central monitoring circuit is configured to, if it is determined that the converter state is the steady state, estimate one or more phase state variables of the first phase based on the converter state variables and to transmit said one or more phase state variables to the first phase monitoring circuit.

13. The system according to any one of claims 9 to 12, wherein the first phase monitoring circuit is configured to, upon receipt of the one or more phase state variables from the central monitoring circuit, determine whether a thermal phase state of the first phase is a steady state or a transient state based on a measurement of the local phase temperature of the first phase.

14. The system according to claim 13, wherein the first phase monitoring circuit is configured to compare the first phase state with the expected phase state only if the central monitoring circuit has determined that the converter state is the steady state, and the first phase monitoring circuit has determined that its thermal phase state is the steady state.

15. A method of monitoring a multiphase power converter comprising a plurality of phases, the method comprising

- determining, by a first phase monitoring circuit associated with a first phase of the multiphase power converter, a first phase state of the first phase,
- comparing, by the first phase monitoring circuit, the first phase state with an expected phase state,
- transmitting, by the first phase monitoring circuit, the first phase state to a central monitoring circuit if the first phase state deviates from the expected phase state,
- determining, by the central monitoring circuit, based on the first phase state that an unexpected phase state has occurred at the first phase.

**Amended claims in accordance with Rule 137(2) EPC.**

1. A distributed system configured to monitor a multiphase power converter comprising a plurality of phases, the system comprising

- a first phase monitoring circuit associated with a first phase of the multiphase power converter, wherein the first phase monitoring circuit is configured to determine a first phase state of the first phase, compare the first phase state with an expected phase state, and transmit the first phase state to a central monitoring circuit if the first phase state deviates from the expected phase state, and
- a central monitoring circuit coupled to the first phase monitoring circuit via a communication interface, wherein the central monitoring circuit is configured to receive the first phase state and to determine based on the first phase state if an unexpected phase state has occurred at the first phase,
wherein the central monitoring circuit is configured to determine whether a converter state of the multiphase power converter is a steady state or a transient state, and
wherein the first phase monitoring circuit is configured to compare the first phase state with the expected phase state only if the central monitoring circuit has determined that the converter state is the steady state.

2. The system according to claim 1, wherein the first phase state is based on at least one of: a value indicative of a current through the first phase, a value indicative of a local phase temperature, a value indicative of a control signal applied to the first phase, and a value indicative of an ambient temperature associated with the overall multiphase power converter.

3. The system according to any one of the preceding claims, wherein the first phase state comprises a coefficient

, and wherein the first phase monitoring circuit is configured to determine the coefficient $\alpha$ based on the value T indicative of a local phase temperature, the value $\beta$ indicative of an ambient temperature associated with the overall multiphase power converter, and the value $I$ indicative of a current through the first phase.

4. The system according to claim 3, wherein the value T indicative of the local phase temperature is indicative of a temperature of a transistor of the first phase.

5. The system according to claim 3 or 4, wherein the central monitoring circuit is configured to receive the value $\beta$ indicative of the ambient temperature from a temperature sensor and to forward the value $\beta$ to the first phase monitoring circuit.

6. The system according to any one of claims 3 to 5, wherein the first phase monitoring circuit is configured to transmit the first phase state to the central monitoring circuit only if the coefficient $\alpha \geq \alpha_0 * f$, wherein $\alpha_0$ is an initial coefficient, and f is a factor larger than 1.

7. The system according to any one of the preceding claims, wherein the unexpected phase state of the first phase is an increased on-resistance of a transistor within the first phase.

8. The system according to any one of the preceding claims, wherein the central monitoring circuit is configured to receive a second phase state from a second phase monitoring circuit and to determine, based on both the first phase state and the second phase state, that the unexpected phase state at the first phase has occurred.

9. The system according to any one of the preceding claims, wherein the central monitoring circuit is configured to determine whether the converter state of the multiphase power converter is the steady state or the transient state based on at least one of the following converter state variables: an input voltage of the multiphase power converter, an output voltage of the multiphase power converter, an output current of the multiphase power converter, a reference voltage of the multiphase power converter, and a duty cycle control signal of the multiphase power converter.

10. The system according to claim 9, wherein the central monitoring circuit is configured to determine a variance of the at least one of the converter state variables, and to determine that the converter state is the transient state if the variance exceeds a threshold value.

11. The system according to claim 9, wherein the central monitoring circuit is configured to determine whether the converter state of the multiphase power converter is the steady state or the transient state using an artificial neural network.

12. The system according to any one of claims 9 or 11, wherein the central monitoring circuit is configured to, if it is determined that the converter state is the steady state, estimate one or more phase state variables of the first phase based on the converter state variables and to transmit said one or more phase state variables to the first phase monitoring circuit.

13. The system according to any one of claims 9 to 12, wherein the first phase monitoring circuit is configured to, upon receipt of the one or more phase state variables from the central monitoring circuit, determine whether a thermal phase state of the first phase is a steady state or a transient state based on a measurement of the local phase temperature of the first phase.

14. The system according to claim 13, wherein the first phase monitoring circuit is configured to compare the first phase state with the expected phase state only if the central monitoring circuit has determined that the converter state is the steady state, and the first phase monitoring circuit has determined that its thermal phase state is the steady state.

15. A method of monitoring a multiphase power converter comprising a plurality of phases, the method comprising

- determining, by a first phase monitoring circuit associated with a first phase of the multiphase power converter, a first phase state of the first phase,
- comparing, by the first phase monitoring circuit, the first phase state with an expected phase state,
- transmitting, by the first phase monitoring circuit, the first phase state to a central monitoring circuit if the first phase state deviates from the expected phase state,

- determining, by the central monitoring circuit, based on the first phase state that an unexpected phase state has occurred at the first phase, and the method further comprising

- determining, by the central monitoring circuit, whether a converter state of the multiphase power converter is a steady state or a transient state, and

- comparing the first phase state with the expected phase state by the first phase monitoring circuit only if the central monitoring circuit has determined that the converter state is the steady state.

## FIG 1

## FIG 2

# FIG 3

| Central Logic | Phase Logic |
|---|---|

Converter Steady State Estimator

— Transient → Stop Phase Steady State Estimator

↓ Steady-State

Phase State Estimator

→ Phase Steady State Estimator — Transient → No action

↓ Steady-State

Phase state comparator — Expected → No action

↓ Unexpected

Central Logic Estimator ← Raise Issue to Central Logic

FIG 4

# FIG 5

Vref

Vout

Vin

Iout

U

Steady State Estimator

transient/ steady state

Confidence

# FIG 6

Vin, Iin, Vout, and Iout

Acquire data for both steady state (0) & non-steady state (1)

Split the data into training and validation sets

Train the relevant time series model using training data to identify patterns that correspond to 0 or 1

Choose evaluation metrics (e.g. root mean square error)

Steady state or not

Determine the correct classification based on the threshold

Determine optimal threshold using ROC/AUC

Evaluate the trained model on the validation dataset

FIG 7

Central Logic

- steady state flag
- environment temperature
- request phase data
  after event

Phase Logic

- suspicion flag with phase status
  (T, I, alpha, beta, ID)

Europäisches
Patentamt

European
Patent Office

Office européen
des brevets

# EUROPEAN SEARCH REPORT

**Application Number**

EP 24 18 8617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/051490 A1 (DOMINGO REYNALDO [US]) 16 February 2023 (2023-02-16) | 1-5, 8-11,13 | INV. H02M1/32 |
| Y | * paragraphs [0056], [0059], [0091], | 7 | H02M3/158 |
| A | [0092]; figure 3 * | 6,12,14 | |
| | ----- | | |
| X | US 8 710 810 B1 (MCJIMSEY MICHAEL D [US] ET AL) 29 April 2014 (2014-04-29) * column 29, lines 14,15; figures 3,32 * | 1,15 | |
| | ----- | | |
| Y | US 11 228 248 B1 (ZAFARANA ALESSANDRO [IT]) 18 January 2022 (2022-01-18) * column 10, lines 42-64 * | 7 | |
| | ----- | | |

**TECHNICAL FIELDS SEARCHED (IPC)**

H02M

The present search report has been drawn up for all claims

| Place of search | Date of completion of the search | Examiner |
|---|---|---|
| The Hague | 9 December 2024 | Gusia, Sorin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 18 8617

09-12-2024

| Patent document cited in search report | | Publication date | Patent family member(s) | | Publication date |
|---|---|---|---|---|---|
| US 2023051490 | A1 | 16-02-2023 | CN | 115704868 A | 17-02-2023 |
| | | | EP | 4135177 A1 | 15-02-2023 |
| | | | US | 2023051490 A1 | 16-02-2023 |
| US 8710810 | B1 | 29-04-2014 | US | 8710810 B1 | 29-04-2014 |
| | | | US | 8907642 B1 | 09-12-2014 |
| | | | US | 9106201 B1 | 11-08-2015 |
| | | | US | 9374003 B1 | 21-06-2016 |
| | | | US | 9407145 B1 | 02-08-2016 |
| | | | US | 10222814 B1 | 05-03-2019 |
| US 11228248 | B1 | 18-01-2022 | NONE | | |